# Europäisches Patentamt

## European Patent Office

## Office européen des brevets

(19)

(11) Veröffentlichungsnummer: **0 445 411 B1**

(12) **EUROPÄISCHE PATENTSCHRIFT**

(45) Veröffentlichungstag der Patentschrift: **17.05.95**

(21) Anmeldenummer: **90124867.4**

(22) Anmeldetag: **20.12.90**

(51) Int. Cl.⁶: **C08G 18/58**, C08G 18/48, C08G 18/42, C08G 18/66, //(C08G18/58,101:00)

(54) **Verfahren zur Herstellung von im wesentlichen geschlossenzelligen Urethan-, Harnstoff- und/oder Biuretgruppen aufweisenden Hartschaumstoffen und deren Verwendung.**

(30) Priorität: **08.03.90 DE 4007330**

(43) Veröffentlichungstag der Anmeldung:
**11.09.91 Patentblatt 91/37**

(45) Bekanntmachung des Hinweises auf die Patenterteilung:
**17.05.95 Patentblatt 95/20**

(84) Benannte Vertragsstaaten:
**BE DE ES FR GB IT SE**

(56) Entgegenhaltungen:
EP-A- 0 331 941     DE-A- 2 704 196
DE-A- 3 630 225     DE-A- 3 829 759
US-A- 4 303 755     US-A- 4 379 904

(73) Patentinhaber: **BAYER AG**

**D-51368 Leverkusen (DE)**

(72) Erfinder: **Welte, Rainer, Dr.**
**Kaiserstrasse 7**
**W-5090 Leverkusen (DE)**
Erfinder: **Scholl, Hans-Joachim, Dr.**
**Am Feldrain 5**
**W-5000 Koeln 80 (DE)**

**Beschreibung**

Die Erfindung betrifft ein neues Verfahren zur Herstellung von im wesentlichen geschlossenzelligen Urethan-, Harnstoff- und/oder Biuretgruppen aufweisenden Hartschaumstoffen und deren Verwendung als Dämmstoffe und/oder zur Verstärkung von mechanischen Konstruktionsteilen.

Verfahren zur Herstellung von im wesentlichen geschlossenzelligen Urethan-, Harnstoff- und/oder Biuretgruppen aufweisenden Hartschaumstoffen sind allgemein bekannt.

Eine Übersicht zur Herstellung entsprechender Hartschaumstoffe wird beispielsweise im Kunststoff-Handbuch, Band VII, "Polyurethane", herausgegeben von R. Vieweg und A. Höchtlen, (Verlag Carl Hanser, München 1966) Seiten 504 ff. gegeben.

Zur Herstellung derartiger Hartschaumstoffe werden üblicherweise aromatische Polyisocyanate mit höhermolekularen Polyolen, vorzugsweise Polyether- oder Polyesterpolyolen, in Gegenwart von Treibmitteln, Katalysatoren, Flammschutzmitteln und anderen Hilfs- und Zusatzstoffen zur Reaktion gebracht. Es ist ferner bekannt, anstelle von Polyether- oder Polyesterpolyolen Mischungen der genannten Aufbaukomponenten zu verwenden. Mitentscheidend für die Durchführung dieser Maßnahme war eine Kostensenkung, die durch Abmischung von teueren zur Herstellung von qualitativ hochwertigen PU-Hartschaumstoffen geeigneten Polyesterpolyolen mit preisgünstigen Polyetherpolyolen erzielt wird. Geeignete Polyesterpolyole mit niedriger Viskosität zur Herstellung von PU-Hartschaumstoffen mit guten mechanischen Eigenschaften werden beispielsweise in der DE-OS-27 04 196 beschrieben.

Auch können Ester als Recyclingprodukte von höhermolekularen Estern eingesetzt werden; in diesem Fall können auch die Ester als preisgünstigere Komponenten zur Reduzierung des Gemischpreises eingesetzt werden. Diese preiswerten Ester werden beispielsweise durch Glykolyse hochmolekularer DMT-Polymere oder durch Verarbeitung der bei der DMT-Herstellung zurückbleibenden Destillationsrückstände gewonnen.

Durch die Verwendung von Polyesterpolyolen als höhermolekulare Polyhydroxylverbindung zur Herstellung von Urethangruppen aufweisenden Hartschaumstoffen kann insbesondere deren Flammwidrigkeit verbessert und die Sprödigkeit reduziert werden. Nachteilig ist jedoch, daß Polyester-polyole aufgrund ihrer relativ hohen Polarität im Vergleich zu Polyetherpolyolen, vorzugsweise Polyoxypropylen-polyolen, mit den bisher als Treibmittel eingesetzten niedrigsiedenden halogenierten Kohlenwasserstoffen nur unzureichend mischbar sind.

Dieser Nachteil wird gemäß DE-OS 36 42 666 dadurch überwunden, daß Polyester-polyole mit Alkylseitengruppen mitverwendet werden.

Alle genannten Verfahrensweisen erfordern zwingend die Mitverwendung von FCKW-Treibmitteln, damit erwünschte Hartschaum-Stoffcharakteristiken wie z.B. Zähigkeit, Haftung an Deckschichten sowie verringerte Entflammbarkeit erzielt werden.

Wie einem Vergleichsbeispiel zu entnehmen ist, zeigen entsprechende Hartschaumstoffe ohne die Mitverwendung von FCKW-Treibmittel wesentliche Nachteile: Sprödigkeit, Entflammbarkeit und Nichthaftung an Deckschichten.

Der Erfindung lag daher die Aufgabe zugrunde, ein neues Verfahren zur Herstellung von Hartschaumstoffen mit großer Zähigkeit, Haftung und verringerter Entflammbarkeit zur Verfügung zu stellen, das

a) mit herkömmlichen Rezepturbestandteilen auskommt und dennoch

b) den Einsatz von FCKW-Treibmitteln vermeidet.

Wie überraschenderweise gefunden wurde, konnte diese Aufgabe mit dem nachstehend beschriebenen, erfindungsgemäßen Verfahren gelöst werden.

Die Herstellung von ausschließlich wassergetriebenen Weichschaumstoffen war bekannt (EP-A 331 941).

Gegenstand der Erfindung ist ein Verfahren zur Herstellung von im wesentlichen geschlosenenzelligen Urethan-, Harnstoff- und/oder Biuretgruppen aufweisenden Hartschaumstoffen durch Umsetzung von

a) organischen Polyisocyanaten mit

b) höhermolekularen Polyolen in Gegenwart von

c) Wasser als Treibmittel und gegebenenfalls in Gegenwart von

d) Kettenverlängerungs- und/oder Vernetzungsmitteln sowie

c) Katalysatoren und weiteren Hilfsmitteln und/oder Zusatzstoffen,

bei einer Kennzahl von 90 bis 150,

dadurch gekennzeichnet, daß man

als höhermolekulares Polyol b) Mischungen aus b1) mindestens zwei Hydroxylgruppen aufweisenden Polyestern einer OH-Zahl größer 150 und/oder mindestens zwei Hydroxylgruppen aufweisenden Polyethern einer OH-Zahl größer 200, und b2) mindestens zwei Hydroxylgruppen aufweisenden ethylenoxidhaltigen Polyethern einer OH-Zahl kleiner 100 verwendet mit einem Ethylenoxidgehalt von 10 bis 30 Gew% (bezogen auf Gesamtalkylenoxid), wobei die Komponenten b1) und b2) im Mengenverhältnis 70:30 bis 30:70 Gew.-% eingesetzt werden.

Erfindungsgemäß bevorzugt ist,

- daß als Polyolkomponente b1) Polyester einer OH-Zahl > 200 und/oder Polyether einer OH-Zahl > 300 verwendet werden,
- daß als Polyolkomponente b2) ethylenoxidhaltige Polyether einer OH-Zahl von 56 - 25 und einem Ethylenoxidgehalt von 10 bis 30 Gew.-% (bezogen auf Gesamtalkylenoxid) verwendet werden,
- daß die Umsetzung bei Kennzahlen von 100 bis 130 durchgeführt wird und
- daß die im wesentlichen geschlossenzelligen Urethan-, Harnstoff- und/oder Biuretgruppen aufweisenden Hartschaumstoffe Rohdichten von 20 bis 200 kg/m$^3$ besitzen.

Gegenstand der Erfindung ist auch die Verwendung der erfindungsgemäßen, im wesentlichen geschlossenzelligen Urethan-, Harnstoff- und/oder Biuretgruppen aufweisenden Hartschaumstoffe als Dämmstoffe und/oder zur Verstärkung von mechanischen Konstruktionsteilen.

Von erfindungswesentlicher Bedeutung ist insbesondere die Verwendung der genannten Ethylenoxidhaltigen Polyether im Polyolgemisch.

Für die Durchführung des erfindungsgemäßen Verfahrens werden verwendet:

1. Als Ausgangskomponenten aliphatische, cycloaliphatische, araliphatische, aromatische und heterocyclische Polyisocyanate, wie sie z.B. von W. Siefken in Justus Liebigs Annalen der Chemie, 362, Seiten 75 bis 136, beschrieben werden beispielsweise solche der Formel

$$Q(NCO)_n$$

in der

| | |
|---|---|
| n | = 2 bis 5, vorzugsweise 2 bis 3, und |
| Q | = einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen bedeuten, z.B. solche Polyisocyanate, wie sie in der DE-OS 2 832 253, Seiten 10 bis 11, beschrieben werden. |

Besonders bevorzugt werden in der Regel die technisch leicht zugänglichen Polyisocyanate, z.B. das 2,4-und 2,6-Toluylendiisocyanat, sowie beliebige Gemische dieser Isomeren ("TDI") und Polyphenylpolymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate (modifizierte Polyisocyanate"), insbesondere solche modifizierten Polyisocyanate, die sich mit 2,4-und/oder 2,6-Toluylendiisocyanat bzw. vom 4,4'-und/oder 2,4'-Diphenylmethandiisocyanat ableiten.

2. Ausgangskomponenten sind ferner höhermolekulare organische Verbindungen mit mindestens zwei Hydroxylgruppen. Erfindungsgemäß handelt es sich hierbei um ein Polyolgemisch, bestehend aus b1) Polyestern mit einer OH-Zahl größer 150, vorzugsweise von 200 bis 250, und/oder Polyethern mit einer OH-Zahl größer 200, vorzugsweise von 300 bis 400, und b2) Ethylenoxid-haltigen Polyethern mit einer OH-Zahl kleiner 100, vorzugsweise von 56 bis 25, und vorzugsweise mit einem Ethylenoxidgehalt von 10 bis 30 Gew.-%. Die Mengenverhältnisse b1):b2) betragen in der Regel 90:10 bis 10:90, bevorzugt 70:30 bis 30:70 Gew.-%.

3. Gegebenenfalls werden als Ausgangskomponenten Verbindungen mit mindestens zwei gegenüber Isocyanaten reaktionsfähigen Wasserstoffatomen und einem Molekulargewicht von 32 bis 399 mitverwendet. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen.

Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 2 832 253, Seiten 19 - 20 beschrieben.

4. Als Treibmittel wird Wasser eingesetzt.

Die unter 2., 3. und 4. genannten Komponenten werden in solchen Mengen zur Reaktion gebracht, daß die Kennzahl zwischen 90 und 150, vorzugsweise 100 bis 130, liegt.

5. Gegebenenfalls werden Katalysatoren sowie weitere Hilfs- und Zusatzmittel mitverwendet wie

a) die aus der Polyurethanchemie bekannten Katalysatoren, z.B. tertiäre Amine und/oder Organometallverbindungen,

b) oberflächenaktive Zusatzstoffe wie Emulgatoren und Schaumstabilisatoren,

c) Reaktionsverzögerer und Zellregler der an sich bekannten Art wie Paraffine oder Fettalkohole oder Dimethylpolysiloxane sowie Pigmente oder Farbstoffe und Flammschutzmittel der an sich bekannten Art, z.B. Tris-chlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß- oder Schlämmkreide.

Diese gegebenenfalls mitzuverwendenden Katalysatoren und weiteren Hilfs- und Zusatzstoffe werden beispielsweise in der DE-OS 2 732 292, Seiten 21 - 24, beschrieben.

Weitere Beispiele von gegebenenfalls erfindungsgemäß mitzuverwendenden oberflächenaktiven Zusatzstoffen und Schaumstabilisatoren sowie Katalysatoren, Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München, 1966, z.B. auf den Seiten 103 - 113 beschrieben.

Die Herstellung der im wesentlichen geschlossenzelligen Urethan-, Harnstoff- und/oder Biuretgruppen aufweisenden Hartschaumstoffe erfolgt in an sich bekannter Weise, indem die Komponenten rasch miteinander vermischt und zur Umsetzung gebracht werden.

## Beispiele

Schaumstoffe werden nach folgenden Rezepturen in an sich bekannter Weise hergestellt:

|  |  | Beispiel 1 | Beispiel 2 (Vergleich) | Beispiel 3 (Vergleich) | Beispiel 4 | Beispiel 5 (Vergleich) |
|---|---|---|---|---|---|---|
| Weichschaumpolyether 1 | (g) | 30 | - | - | 40 | - |
| Weichschaumpolyether 2 | (g) | - | 30 | - | - | 30 |
| Hartschaumpolyester | (g) | - | - | - | 20 | 20 |
| Hartschaumpolyether 1 | (g) | 70 | 70 | 100 | - | - |
| Hartschaumpolyether 2 | (g) | - | - | - | 40 | 50 |
| Wasser | (g) | 4,00 | 4,00 | 4,00 | 4,20 | 4,00 |
| Silikonstabilisator | (g) | 2,50 | 2,50 | 2,70 | 3,00 | 3,00 |
| Katalysator | (g) | 0,45 | 0,45 | 0,45 | 0,30 | 0,30 |
| Isocyanat 1 | (g) | 139 | 141 | 170 | - | - |
| Isocyanat 2 | (g) | - | - | - | 160 | 172 |
| Reaktionszeiten: |  |  |  |  |  |  |
| Rührzeit | (s) | 10 | 10 | 10 | 10 | 10 |
| Startzeit | (s) | 24 | 29 | 28 | 29 | 32 |
| Abbindezeit | (s) | 179 | 187 | 170 | 136 | 140 |
| Rohdichte (kg/m$^3$) |  | 33,2 | 32,8 | 32,2 | 41,7 | 44,1 |
| Haftung an Blech |  | gut | mittel | keine | gut | mittel |
| Schaumcharakteristik am Blech |  | zäh | zäh-weich | spröde | zäh | zäh-weich |

Weichschaumpolyether 1

Polyether der OH-Zahl 28 mit Propylenglykol als Starter und 87 % PO und (endständig) 13 % EO.

Weichschaumpolyether 2

Polypropylenoxidether der OH-Zahl 56 mit Propylenglykol als Starter.

Hartschaumpolyester

Polyester der OH-Zahl 213 aus Adipinsäure/Phtalsäure (Molverhältnis 1:0,5) und Glycerin/Propylenglykol.

Hartschaumpolyether 1

Polyether auf Basis Zucker/Propylenglykol der OH-Zahl 530.

Hartschaumpolyether 2

Polyether der OH-Zahl 617, mit Trimethylolpropan als Starter mit 33 Gew.-% PO, 67 Gew.-% EO, Viskosität 1150 mPa.s/25°C.

Silikonstabilisator

B 8421, Polyethersiloxan der Fa. Goldschmid, Essen.

Katalysator

Dimethylcyclohexylamin

Isocyanat 1

Rohes MDI, Viskosität bei 20°C: 200 mPa.s

Isocyanat 2

Isocyanatpräpolymer aus rohem MDI (Viskosität bei 20°C = 200 mPs.s) und einem Polyester aus Adipinsäure/Phthalsäure und Diethylenglykol der OH-Zahl 530. Isocyanatgehalt des Prepolymers = 27 Gew.-%, Viskosität bei 24°C = 1000 mPa.s.

Beispiel 1 zeigt, daß ein erfindungsgemäßer Schaum, auch wenn er ausschließlich von Wasser getrieben wird, dennoch eine gute Haftung zu Blech und eine zähe Schaumcharakteristik aufweist.

Beispiel 2 zeigt, daß die Verwendung von nicht-hydrophilierten Weichschaumpolyethern eine schlechtere Haftung sowie eine weichere Schaumstruktur aufweist.

Beispiel 3 zeigt, daß bei ausschließlicher Verwendung von typischen Hartschaumpolyethern keine ausreichende Haftung erzielt werden kann.

Beispiel 4 zeigt die Mitverwendung von Hartschaumpolyestern in einer erfindungsgemäßen Rezeptur. Die Haftung zum Blech ist ausgezeichnet.

Beispiel 5 zeigt, daß bei Verwendung von nicht-hydrophilen Weichschaumpolyethern keine zufriedenstellende Haftung zu erreichen ist.

**Patentansprüche**

**1.** Verfahren zur Herstellung von im wesentlichen geschlossenzelligen Urethan-, Harnstoff- und/oder Biuretgruppen aufweisenden Hartschaumstoffen durch Umsetzung von
a) organischen Polyisocyanaten mit
b) höhermolekularen Polyolen in Gegenwart von
c) Wasser als Treibmittel und gegebenenfalls in Gegenwart von
d) Kettenverlängerungs- und/oder Vernetzungsmitteln sowie
e) Katalysatoren und weiteren Hilfsmitteln und/oder Zusatzstoffen,
bei einer Kennzahl von 90 bis 150,
dadurch gekennzeichnet, daß man
als höhermolekulares Polyol b) Mischungen aus b1) mindestens zwei Hydroxylgruppen aufweisenden

EP 0 445 411 B1

Polyestern einer OH-Zahl größer 150 und/oder mindestens zwei Hydroxylgruppen aufweisenden Polyethern einer OH-Zahl größer 200, und b2) mindestens zwei Hydroxylgruppen aufweisenden ethylenoxidhaltigen Polyethern mit einem Ethylenoxidgehalt von 10 bis 30 Gew-% (bezogen auf Gesamtalkylenoxid) und einer OH-Zahl kleiner 100 verwendet, wobei die Komponenten b1) und b2) im Mengenverhältnis 70:30 bis 30:70 Gew.-% eingesetzt werden.

2. Verfahren gemäß Anspruch 1, dadurch gekennzeichnet, daß als Polyolkomponente b1) Polyester einer OH-Zahl > 200 und/oder Polyether einer OH-Zahl > 300 verwendet werden.

3. Verfahren gemäß Anspruch 1 und 2, dadurch gekennzeichnet, daß als Polyolkomponente b2) ethylenoxidhaltige Polyether einer OH-Zahl von 56 - 25 verwendet werden.

4. Verfahren gemäß Anspruch 1 bis 3, dadurch gekennzeichnet, daß die Umsetzung bei Kennzahlen von 100 bis 130 durchgeführt wird.

5. Verfahren gemäß Anspruch 1 bis 4, dadurch gekennzeichnet, daß die im wesentlichen geschlossenzelligen Urethan-, Harnstoff- und/oder Biuretgruppen aufweisenden Hartschaumstoffe Rohdichten von 20 bis 200 kg/m$^3$ besitzen.

6. Verwendung der gemäß Anspruch 1 bis 5 erhältlichen, im wesentlichen geschlossenzelligen Urethan-, Harnstoff- und/oder Biuretgruppen aufweisenden Hartschaumstoffe als Dämmstoffe und/oder zur Verstärkung von mechanischen Konstruktionsteilen.

**Claims**

1. A process for the production of substantially closed-cell rigid foams containing urethane, urea and/or biuret groups by reaction of
   a) organic polyisocyanates with
   b) relatively high molecular weight polyols in the presence of
   c) water as blowing agent and optionally in the presence of
   d) chain-extending and/or crosslinking agents and
   e) catalysts and other auxiliaries and/or additives,
   at an index of 90 to 150,
   characterized in that
   the relatively high molecular weight polyols b) used are mixtures of b1) polyesters containing at least two hydroxyl groups and having an OH value above 150 and/or polyethers containing at least two hydroxyl groups and having an OH value above 200 and b2) ethylene-oxide-containing polyethers bearing at least two hydroxyl groups with an ethylene oxide content of 10 to 30% by weight (based on total alkylene oxide) and an OH value below 100, components b1) and b2) being used in a quantity ratio of 70:30 to 30:70% by weight.

2. A process as claimed in claim 1, characterized in that polyesters having an OH value of > 200 and/or polyethers having an OH value of > 300 are used as the polyol component b1).

3. A process as claimed in claims 1 and 2, characterized in that polyethers containing ethylene oxide with an OH value of 56 to 25 are used as the polyol component b2).

4. A process as claimed in claims 1 to 3, characterized in that the reaction is carried out at indices of 100 to 130.

5. A process as claimed in claims 1 to 4, characterized in that the substantially closed-cell rigid foams containing urethane, urea and/or biuret groups have densities of 20 to 200 kg/m$^3$.

6. The use of the substantially closed-cell rigid foams containing urethane, urea and/or biuret groups obtainable by the process claimed in claims 1 to 5 as insulating materials and/or for reinforcing mechanical structural components.

**Revendications**

1. Procédé pour la préparation de mousses rigides à cellules essentiellement fermées et contenant des groupes uréthannes, usées et/ou biurets pas réaction de

   a) des polyisocyanates organiques avec

   b) des polyols à haut poids moléculaire en présence de

   c) l'eau qui sert d'agent porogène et le cas échéant en présence de

   d) des agents d'allongement des chaînes et/ou agents réticulants, et

   e) des catalyseurs et d'autres produits auxiliaires et/ou additifs, à un indice de 90 à 150,

   caractérisé en ce que l'on utilise en tant que polyols à haut poids moléculaire b) des mélanges de b1) des polyesters à au moins deux groupes hydroxy, à un indice d'OH supérieur à 150 et/ou des polyéthers à au moins deux groupes hydroxy, à un indice d'OH supérieur à 200, et b2) des polyéthers contenant de l'oxyde d'éthylène, à une teneur en oxyde d'éthylène de 10 à 30 % en poids (par rapport aux oxydes d'alkylène), à au moins deux groupes hydroxy et à un indice d'OH inférieur à 100, les composants b1) et b2) étant mis en oeuvre dans des proportions relatives de 70:30 à 30:70 % en poids.

2. Procédé selon la revendication 1, caractérisé en ce que l'on utilise en tant que composants polyols b1) des polyesters d'indice d'OH supérieur à 200 et/ou des polyéthers d'indice d'OH supérieur à 300.

3. Procédé selon les revendications 1 et 2, caractérisé en ce que l'on utilise en tant que composants polyols b2) des polyéthers contenant de l'oxyde d'éthylène à un indice d'OH de 56 à 25.

4. Procédé selon les revendications 1 à 3, caractérisé en ce que l'on effectue la réaction à des indices de 100 à 130.

5. Procédé selon les revendications 1 à 4, caractérisé en ce que les mousses rigides à cellules essentiellement fermées et contenant des groupes uréthannes, usées et/ou biurets, ont des densités apparentes de 20 à 200 kg/m$^3$.

6. Utilisation des mousses rigides à cellules essentiellement fermées, contenant des groupes uréthannes, urées et/ou biurets, obtenues selon les revendications 1 à 5, en tant que matières isolantes et/ou pour le renforcement de pièces de construction mécanique.